# EUROPÄISCHE PATENTSCHRIFT

(11) **EP 0 603 814 B1**
(45) Veröffentlichungstag und Bekanntmachung des Hinweises auf die Patenterteilung: **30.07.1997**
(21) Anmeldenummer: 93120593.4
(22) Anmeldetag: 21.12.1993
(51) Int. Cl.: G01N 21/74

(54) **Plattform für einen querbeheizten, elektrothermischen Atomisatorofen zur Atomabsorptions-Spektroskopie**
Platform for a side-heated electrothermical furnace for atomic absorption spectroscopy
Plateforme pour un four électrothermique à chauffage latéral pour la spectroscopie d'absorption atomique

(30) Priorität: 23.12.1992 DE 4243767
(43) Veröffentlichungstag der Anmeldung: 29.06.1994
(73) Patentinhaber: CARL ZEISS JENA GmbH, 07745 Jena (DE)
(72) Erfinder: Eichardt, Klaus, D-07745 Jena (DE)
(74) Vertreter: Hampe, Holger

(56) Entgegenhaltungen:
- DD-A- 252 249
- DD-A- 264 075
- DE-A- 3 307 251
- DE-U- 8 714 670
- DE-U- 8 803 144
- US-A- 4 407 582

## Beschreibung

Die Erfindung betrifft eine Plattform gemäß dem Oberbegriff des Hauptanspruches.

Es ist bereits bekannt, in der elektrothermischen Atomabsorptions-Spektroskopie in elektrisch beheizten Graphitöfen, die ein rohrförmiges, längsbeheiztes Ofenteil aufweisen, sogenannte Plattformen im Rohrinneren vorzusehen, um die Atomisierung der Probe gegenüber der elektrothermischen Aufheizung der Wandung und des mit Schutzgas gefüllten Innenraumes des Ofenrohres zu verzögern.
Diese, vorzugsweise in Draufsicht rechteckigen Plattformen, die an ihrer Oberseite eine Vertiefung zur Probenaufnahme aufweisen, können dabei sowohl frei beweglich als auch fest, über direkten Körperkontakt oder über angeformte Stege mit dem Ofenrohrinneren verbunden sein
(DE-PS 2924123, DE-OS 3545635, DE-OS 3823346, DE-OS 3734001, DD-A 252249).
Durch das Prinzip des längsbeheizten Ofenrohres mit dem Nachteil des Temperaturabfalls um mehrere hundert Grad, ausgehend von der Rohrmitte, zu beiden Rohrenden hin, ist der eigentlich erwünschte Verzögerungseffekt insgesamt vermindert und nur auf einen Mittelbereich konstanter Rohrtemperatur begrenzt.

Die Plattformen in längsbeheizten Ofenrohren können nicht, wie z.B. bei der Feststoffprobenanalyse erforderlich, nach jedem Meßvorgang zur Neubeschickung und Probeneinwaage ein- und ausgeführt werden, ohne daß das gesamte System Rohr-Stromzuführungselektroden in seinem bestehenden elektrischen Kontaktierungszustand gestört wird.
Für ein querbeheiztes Ofensystem ist es bekannt (EP 381 948), eine Plattform zylindrischer Form in der Nähe der Plattformmitte an einem Steg mit dem Rohrkörper zu verbinden, um den erwünschten Temperaturverzögerungseffekt zu erzeugen. Am Ort des Steges erfolgt Wärmeleitung von der Rohrwand auf die Plattform, welche den gewünschten Temperaturverzögerungseffekt verringert d.h. die Temperatur auf der Plattform steigt ähnlich schnell wie die Temperatur der Rohrwand und damit schneller als die Gasphasentemperatur und die Atomisation der Probe setzt bereits ein, bevor ein thermisches Gleichgewicht im Rohrinnenraum erreicht ist.
Ein besonderer Nachteil bei dieser Ausführung ist es außerdem, daß der Abstand zwischen Plattform und Rohrwand sich infolge des notwendigen Anpreßdrucks für die elektrische Kontaktierung verändern kann.
Durch diesen Druck, der auf die Mantelfläche des Rohrkörpers wirkt, kann dieser sich bei den angewandten hohen Temperaturen irreversibel verformen, was zu einem direkten Plattformkontakt führt.
In diesem Fall ist der erwünschte Effekt des Ofensystems aufgehoben.
Bei der sogenannten "Rohr in Rohr"-Technik, wie sie im US-Patent 4407582 beschrieben wird, hat die Plattform für die Probe keinen direkten thermischen Kontakt mit der Innenwand des mit den Elektroden verbundenen rohrförmigen Ofenkörpers.

Ein übliches Graphitrohr ist von einem zusätzlichen (instabilen) Heizmantel umgeben.
Durch das Innenrohr wird das Auftreffen der Strahlung auf die Probe verhindert.
Die große aufzuheizende Masse und die erforderliche Verkleinerung des gesamten Durchmessers des inneren Rohres verursachen zu lange Aufheizraten und eine Einschränkung des Anwendungsbereiches.
Mögliche unerwünschte Querströme werden begünstigt.
Aufgrund ihrer Nachteile wird die "Rohr in Rohr"-Technik nicht in kommerziellen AAS-Geräten eingesetzt.
Ein solches System ist weiterhin in der DE-OS 3307251 beschrieben.

Das DE-GM 8714670 beschreibt eine querbeheizte Küvette für die Atomabsorptionsspektroskopie mit seitlich am Atomisatorrohr angeformten durchgehenden Kontaktstücken. Eine separate Einrichtung zur Probenhaltung ist nicht vorgesehen.

Der Erfindung liegt nunmehr die Aufgabe zugrunde, die vorstehend geschilderten Nachteile zu beseitigen und damit die Zuverlässigkeit der Plattform-Technik für querbeheizte Ofensysteme zu verbessern.
Insbesondere soll eine ein- und ausführbare, für die Flüssigkeits- und Feststoffanalytik uneingeschränkt einsetzbare Plattform geschaffen werden und durch die Gestaltung der Plattform gleichzeitig die Lebensdauer des rohrförmigen Ofenteiles und die analytische Empfindlichkeit und Reproduzierbarkeit des Ofengesamtsystems erhöht werden.

Die Aufgabe wird erfindungsgemäß durch die kennzeichnenden Merkmale des 1. Anspruchs gelöst. Vorteilhafte Ausgestaltungen sind in den Unteransprüchen beschrieben.
Durch die Ein- und Ausführbarkeit der Plattform kann ein automatisches Graphitofensystem für die Feststoffanalytik geschaffen werden, indem die Plattform mit aufgebrachter Feststoffprobe, beispielsweise über ein Greifsystem, zur Beschickung und Probeneinwaage, ein- und ausgeführt wird.

Durch die ringförmigen Halteteile, an die den Enden des Probenträgers angeordnet sind und von denen mindestens einer mit dem Probenträger eine stoffliche Einheit bildet, entsteht an den Rohrenden eine Barriere, welche die Verweilzeit der Atome im Rohr verlängert bzw. die Dichte der Atomwolke heraufsetzt. Damit wird überraschenderweise das in:Siemer and Frech: "Improving the performance of the CRA atomizer...", Spectrochimica Akta Part B: Vol.39 B, No.S 2/3, pp.261-269, beschriebene Problem auf eine neue und originelle Art und Weise aufgegriffen und gelöst. Die Halteringe, die infolge des durch sie hindurchfließenden Stromes eine zusätzliche Aufheizung erfahren, verringern die sonst üblicherweise an den Rohrenden auftretenden Verluste an Analytatomen durch Wiederanlagerung an diesen Teilen, wie sie bei längsbeheizten Graphitrohren auftreten, wenn Materialverdickungen an den Rohrenden vorgenommen werden, sowie die Temperaturabstrahlung selbst und wirken dem Eintritt des kälteren Schutzgases aus den äußeren Ofenfensterbereichen entgegen.

Durch Veränderungen der Probenträgerlänge kann das Volumen des Raumes im Rohr, in dem sich die erzeugte Atomwolke aufhält, optimiert werden.

Mittels der Halteringe kann die räumliche und zeitliche Aufheizung des Systems beeinflußt und damit seine Empfindlichkeit gesteigert werden, da sie infolge ihrer Kontakte zur Rohrwand vom Strom durchflossen werden und demgemäß ihre Position in der Küvette und ihr Leitungsquerschnitt von Bedeutung sind.
In Kombination der Dimensionierung der Halteringe mit der Konstruktion der Stromzuleitung auf das Ofenrohr lassen sich eine Vielzahl von Einflüssen auf das räumliche und zeitliche Heizverhalten der Küvette einstellen.
Durch die Halteringe wird eine erhebliche Verstärkung der Druckbelastbarkeit des Rohrkörpers bewirkt. Eine Verformung infolge des aufgebrachten mechanischen Drucks bei der elektrischen Kontaktierung wird damit unterbunden.
Durch eine mögliche pyrolytische Beschichtung gemäß aus der Fachliteratur bekannter Verfahren nach Einbringen der Plattform in das Ofenrohr entsteht eine zusätzliche Verstärkung der Haftung zwischen Plattform und Rohr, so daß der Probenträger seine Lage nicht verändern kann.
Indem die Form der inneren Ausnehmung der Halteringe an das je nach Grätetyp unterschiedliche Profil des Meßlichtbündels der erzeugenden Lichtquelle im Probenraum des Spektrometers angepaßt wird, kann die volle Intensität des Meßstrahles wesentlich besser ausgenutzt und damit das die Nachweisvermögen und die Reproduzierbarkeit der Analysen erhöht werden.
Die Plattformen können hierbei beispielsweise aus Kohlenstoffformen wie Graphit, Pyrographit, pyrolytisch beschichtetem Graphit und Glaskohlenstoff oder aus metallischen Werkstoffen, insbesondere Wolfram oder Tantal, oder aus keramischen Werkstoffen bestehen.

Die Erfindung wird nachstehend anhand der schematischen Zeichnungen näher erläutert.
Es zeigen:
- Fig. 1:: Eine räumliche Darstellung eines Ofenkörpers mit einem Teilschnitt durch das Ofenrohr, beinhaltend eine erfindungsgemäße Plattform mit einem Haltering beiderseits des Probenträgers.
- Fig. 2:: Eine räumliche Darstellung analog zu Fig. 1, jedoch mit nur einem zur Plattform gehörigen Haltering, sowie einem zweiten, im Ofenrohrinneren angeformten Haltering.
- Fig. 3, 4, 5:: Jeweils Längsschnitte durch Plattform und Ofenrohr entlang einer Schnittlinie A-A sowie Draufsichten auf erfindungsgemäße Plattformausführungen.
- Fig. 6.1 - 6.3: Drei mögliche Formen der zentralen Öffnung eines Halteringes, dargestellt an Querschnitten in Ofenrohrmitte, entlang einer Schnittlinie B-B.

Ein querbeheizbarer Ofenkörper 1 beinhaltet in seinem Ofenrohr 2 eine Plattform 3, die zwei Halteringe 4, 5 beinhaltet, die mit dem Ofenkörper elektrisch und und mechanisch durch pyrolytische Beschichtung verbunden, aber auch lose in den Ofenkörper eingeschoben sein können. Die Halteringe 4 und 5 sind über in Fig. 3 - 5 dargestellte Übergangszonen 6 mit Probenträger 7 verbunden.

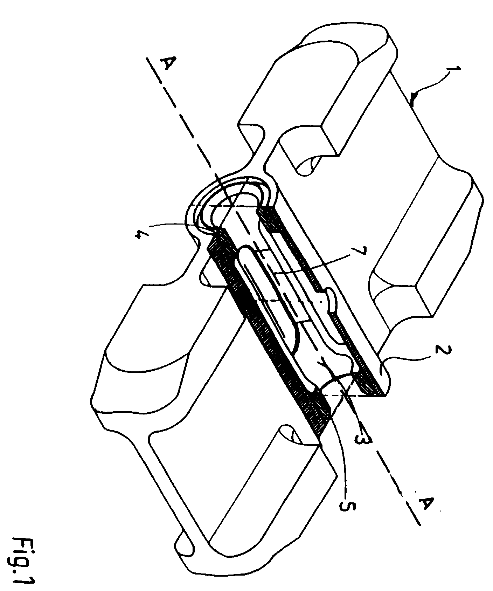

Die Plattform 3 ist auf diese Weise nur über die Halteringe 4, 5 mit dem Ofenkörper 1 elektrisch und thermisch verbunden.
In Verbindung mit der querbeheizten Ausführung des Ofenkörpers 1 führt das dazu, daß durch den Probenträger 7 im wesentlichen kein Stromfluß und damit keine Joulesche Wärmebildung erfolgt, da die Plattform nur in den Ringen 4, 5 jeweils an Zonen gleichen Potentials des Ofenrohres 2 anliegt.
In Fig. 3-5 ist an den Längsschnitten sichtbar, daß der Probenträger 7 hier keinerlei direkten Kontakt zur Innenwandung des Ofenrohrs 2 hat.
Die Ausführungsform gemäß Fig. 1 mit elektrischer und pyrolytischer Verbindung der Ringe 4, 5 mit dem Ofenrohr 2 ist besonders für flüssige Probenformen geeignet, weil der Probenträger seine Position und Lage nicht verändern kann, was zu gut reproduzierbaren Messungen führt.

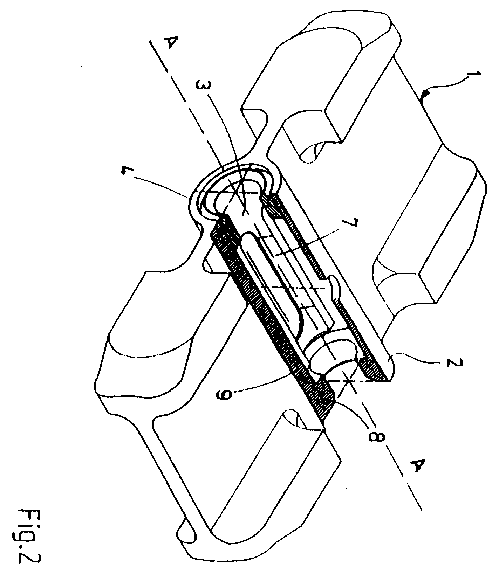

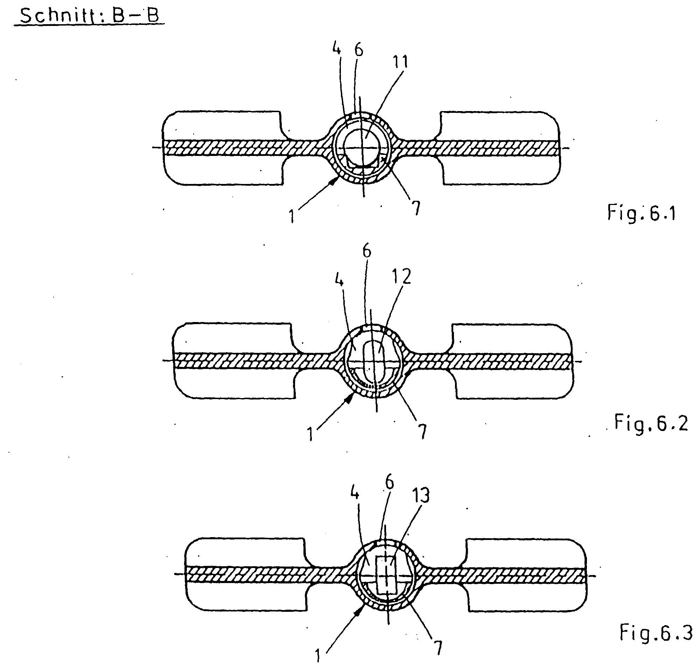

In Fig. 2 besteht die Plattform 3, wie auch in Fig. 5 dargestellt, lediglich aus einem Haltering 4 sowie dem über die Übergangszone 3 angeformten Probenträger 7.
An der dem Haltering 4 gegenüberliegenden Seite des Rohres 2 ist im Rohrinneren ein Haltering 8 angeformt, der die gleiche Geometrie wie der Haltering 4 selbst ausweist.
Zwischen Probenträger 7 und Haltering 8 existiert hierbei ein Spalt 9, der praktisch einen direkten Stromfluß durch den Probenträger 7 der Plattform 3 verhindert.
Der Haltering 8 entsteht hierbei entweder unmittelbar beim Aufbohren des Rohres 2 durch Stehenlassen der Verdickung oder wird nachträglich als separates Einzelteil vor dem pyrolytischen Beschichtungsprozeß eingesetzt und pyrolytisch mit dem Ofenrohr verbunden.
Die Ausführung nach Fig. 2 ist besonders dafür geeignet (aber auch die nach Fig. 1), eine feste Probe, die sich auf dem Probenträger 7 befindet, gemeinsam mit der Plattform 3 in das Probeninnere einzuführen. Zu diesem Zweck können zur Positionierung der Plattform im Rohrinneren hier nicht dargestellte allgemein bekannte Führungsmittel, beispielsweise eine in eine Nut eingreifende, angeformte Nase an Plattform und Rohr vorgesehen sein.
In Fig. 3 weisen die Übergangszonen 6 zur Beeinflussung (Verzögerung) der Wärmeleitung von den Halteringen zum Probenträger vorteilhafterweise Einschnürungen 10 auf.
Der Probenträger 7 beinhaltet eine wannenförmige Ausnehmung zur Probenaufnahme, die verhindert, daß Probenflüssigkeit über die Ausnehmung hinaus in Richtung der Rohrkörperenden oder in Richtung der Innenmantelfläche des Rohrkörpers heraustreten kann, insbesondere beim Trocknungsvorgang.

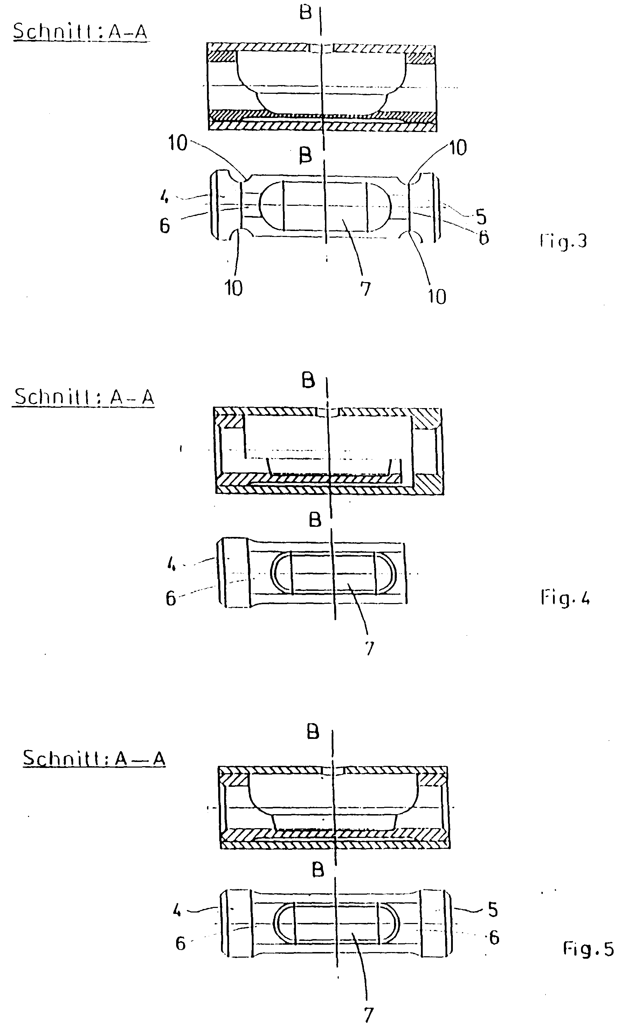

In Fig. 4 ist eine besonders einfach herzustellende, trogförmige Ausnehmung zur Probenaufnahme vorgesehen, die beispielsweise durch Bearbeitung mit einem Zylinderschaftfräser entsteht, in der Ausführung einer Plattform 3 mit nur einem Haltering 4. Fig. 5 zeigt die Ausführung gemäß Fig. 4, jedoch mit zwei Halteringen 4.
In Fig. 6.1 - 6.3 sind geometrische Ausgestaltungsformen (11,12,13) der zentralen Öffnungen der Trägerringe 4, 5 oder 8 dargestellt, die der jeweiligen Form des Meßlichtstrahlenbündels des Spektrometers angepaßt sind, d.h. runder Querschnitt in Fig. 6.1, ovaler oder ellipsoider Querschnitt in Fig. 6.2 sowie rechteckiger Querschnitt in Fig. 6.3.
Die Form der zentralen Öfffnungen (11,12,13) sowie ihre Abmessung sind darüber hinaus auch in anderen Richtungen variierbar.
Insbesondere kann durch Verkleinerung der Abmessungen der Ausnehmung die Verweilzeit und Atomdichte der Analytatome im Rohrinneren, während des Atomisierungsschrittes eines Analysenprogrammes erhöht werden, ohne daß die vorgelagerten Schritte Trocknung und thermische Vorbehandlung der Probe selbst in ihren funktionellen Ablauf und Zusammenwirken mit den internen Schutzgasströmen gestört werden.

## Patentansprüche

1. Plattform für einen querbeheizten, elektrothermischen Atomisatorofen zur AAS mit einem Ofenrohr (2), wobei die Probe auf einem Probenträger (7) der thermischen Strahlung der elektrisch aufgeheizten Rohrinnenwand direkt ausgesetzt ist, und
zur Halterung des Probenträgers (7) sowie zur kontrollierten Begrenzung der thermischen Expansion der Analytatome im Ofenrohr (2) stromdurchflossene Halteringe (4, 5) an den Rohrenden vorgesehen sind, die den Rohrquerschnitt einengen, deren äußerer Durchmesser in etwa dem Innendurchmesser des Ofenrohres entspricht und deren Breite in Summe weniger als 40 % der Rohrlänge beträgt,
wobei mindestens ein einzelner der Halteringe (4, 5) mit dem Probenträger (7) fest verbunden ist und mit diesem in stofflicher Einheit die Plattform bildet
und der Probenträger (7) selbst keinen elektrischen oder direkten thermischen Kontakt zur Rohrwand hat.

2. Plattform nach Anspruch 1, dadurch gekennzeichnet, daß mindestens einer der Halteringe (4,5) über eine Übergangszone (6) zur Regelung des Wärmezuflusses mit dem Probenträger (7) verbunden ist.

3. Plattform nach Anspruch 1 oder 2, dadurch gekennzeichnet, daß mindestens einer der Halteringe (4,5) durch eine pyrolytisch aufgebrachte Schicht fest mit dem Ofenrohr (2) verbunden ist.

4. Plattform nach einem der Ansprüche 1-3, dadurch gekennzeichnet, daß beidseitig des Probenträgers ein Haltering (4,5) vorgesehen ist, der mit dem Probenträger fest verbunden ist und mit diesem eine stoffliche Einheit bildet.

5. Plattform nach Anspruch 1 oder 2, dadurch gekennzeichnet, daß die Plattform, insbesondere bei der Feststoffanalyse, als separate Einheit auswechselbar ist.

6. Plattform nach Anspruch 5, dadurch gekennzeichnet, daß ein Haltering (4) vorgesehen ist, der mit dem Probenträger fest verbunden ist und mit diesem eine stoffliche Einheit bildet, wobei auf der dem Haltering (4) gegenüberliegenden Seite im Rohrinneren ein zweiter Ring (8) angeformt ist, der die gleiche geometrische Gestalt wie der Haltering (4) hat.

7. Plattform nach Anspruch 6, dadurch gekennzeichnet, daß sich zwischen Probenträger (7) und zweitem Haltering (8) ein Spalt (9) befindet.

8. Plattform nach Anspruch 5, dadurch gekennzeichnet, daß beidseitig des Probenträgers ein mit diesem fest verbundener Haltering (4,5) vorgesehen ist.

9. Plattform nach einem der Ansprüche 1 - 8, dadurch gekennzeichnet, daß die Form der zentralen Öffnung (11,12,13) des oder der Halteringe (4,8) an die Form des Meßlichtstrahlenbündels angepaßt ist.

10. Plattform nach Anspruch 9, dadurch gekennzeichnet, daß die zentrale Öffnung (11) kreisförmig ist.

11. Plattform nach Anspruch 9, dadurch gekennzeichnet, daß die zentrale Öffnung (12,13) die Form eines vertikalen Spaltes hat.

12. Plattform nach Anspruch 11, dadurch gekennzeichnet, daß der Spalt (12) oval ist.

13. Plattform nach Anspruch 11, dadurch gekennzeichnet, daß der Spalt (13) rechteckig ist.

14. Plattform nach Anspruch 11, dadurch gekennzeichnet, daß der Spalt ellipsoide Form hat.

15. Plattform nach einem der Ansprüche 1 - 14, dadurch gekennzeichnet, daß der Probenträger eine wannenförmige Ausnehmung aufweist.

16. Plattform nach einem der Ansprüche 1 - 14, dadurch gekennzeichnet, daß der Probenträger eine trogförmige Ausnehmung aufweist.

17. Plattform nach einem der Ansprüche 1 - 16, dadurch gekennzeichnet, daß zur Einführung der Plattform bei der Feststoffanalyse Führungsmittel im Ofenrohr und/oder der Plattform vorgesehen sind.

18. Plattform nach einem der Ansprüche 1 - 17, dadurch gekennzeichnet, daß die Übergangszone (6) zwischen Halteringen und Probenträger Einschnürungen und/ oder Durchbrüche zur Beeinflussung des Wärmeflusses von den Halteringen (4) zum Probenträger (7) aufweist.

19. Plattform nach einem der Ansprüche 1 - 18, dadurch gekennzeichnet, daß die Plattform aus Graphit oder pyrolytisch beschichteten Graphit besteht.

20. Plattform nach einem der Ansprüche 1 - 18, dadurch gekennzeichnet, daß die Plattform aus einem keramischen Werkstoff besteht.

21. Plattform nach einem der Ansprüche 1 - 18, dadurch gekennzeichnet, daß die Plattform aus Glaskohlenstoff besteht.

22. Plattform nach einem der Ansprüche 1 - 18, dadurch gekennzeichnet, daß die Plattform aus einem metallischen Werkstoff besteht.

23. Plattform nach Anspruch 22, dadurch gekennzeichnet, daß die Plattform aus Wolfram besteht.

24. Plattform nach Anspruch 22, dadurch gekennzeichnet, daß die Plattform aus Tantal besteht.

25. Plattform nach einem der Ansprüche 1-18, dadurch gekennzeichnet, daß die Plattform aus Pyrographit besteht.

26. Plattform nach einem der Ansprüche 1 -24, dadurch gekennzeichnet, daß die zentrale Öffnung des oder der Halteringe (4,8) und damit der effektiv wirkende Querschnitt des hindurchtretenden Meßlichtbündels bis auf ein für das Nachweisvermögen und die Reproduzierbarkeit der Analyse minimal erforderliches Maß reduziert ist.

## Claims

1. Platform for a side-heated electrothermal atomizer furnace for AAS (atomic absorption spectroscopy) with a furnace tube (2), the sample on a sample carrier (7) being directly exposed to the thermal radiation from the electrically heated tube inner wall, and holding rings (4, 5), through which the electric current flows, being provided at the tube ends for the purpose of holding the sample carrier (7) and for the purpose of the controlled limiting of the thermal expansion of the analyte atoms in the furnace tube (2), said holding rings constricting the tube cross-section, their external diameter approximately corresponding to the internal diameter of the furnace tube and their width in total being less than 40% of the tube length, at least one only of the holding rings (4, 5) being firmly connected to the sample carrier (7) and forming the platform with the latter as a material unit, and the sample carrier (7) itself having no electrical or direct thermal contact with the tube wall.

2. Platform according to Claim 1, characterized in that at least one of the holding rings (4, 5) is connected to the sample carrier (7) via a transition zone (6) for controlling the supply of heat.

3. Platform according to Claim 1 or 2, characterized in that at least one of the holding rings (4, 5) is firmly connected to the furnace tube (2) by means of a pyrolytically applied layer.

4. Platform according to one of Claims 1 - 3, characterized in that there is provided on both sides of the sample carrier a holding ring (4, 5) which is firmly connected to the sample carrier and forms with the latter a material unit.

5. Platform according to Claim 1 or 2, characterized in that the platform, in particular in the analysis of solids, can be exchanged as a separate unit.

6. Platform according to Claim 5, characterized in that a holding ring (4) is provided, which is firmly connected to the sample carrier and forms with the latter a material unit, a second ring (8) being integrally moulded in the tube interior on that side opposite the holding ring (4) and having the same geometric shape as the holding ring (4).

7. Platform according to Claim 6, characterized in that there is a gap (9) between sample carrier (7) and second holding ring (8).

8. Platform according to Claim 5, characterized in that there is provided on both sides of the sample carrier a holding ring (4, 5) which is firmly connected to it.

9. Platform according to one of Claims 1 - 8, characterized in that the shape of the central aperture (11, 12, 13) of the holding ring or rings (4, 8) is matched to the shape of the measuring light beam.

10. Platform according to Claim 9, characterized in that the central aperture (11) is circular.

11. Platform according to Claim 9, characterized in that the central aperture (12, 13) has the shape of a vertical slot.

12. Platform according to Claim 11, characterized in that the slot (12) is oval.

13. Platform according to Claim 11, characterized in that the slot (13) is rectangular.

14. Platform according to Claim 11, characterized in that the slot has an ellipsoidal shape.

15. Platform according to one of Claims 1 - 14, characterized in that the sample carrier has a well-shaped recess.

16. Platform according to one of Claims 1 - 14, characterized in that the sample carrier has a trough-shaped recess.

17. Platform according to one of Claims 1 - 16, characterized in that, in order to introduce the platform for the analysis of solids, guiding means are provided in the furnace tube and/or on the platform.

18. Platform according to one of Claims 1 - 17, characterized in that the transition zone (6) between holding rings and sample carrier has constrictions and/or perforations in order to influence the flow of heat from the holding rings (4) to the sample carrier (7).

19. Platform according to one of Claims 1 - 18, characterized in that the platform consists of graphite or pyrolytically coated graphite.

20. Platform according to one of Claims 1 - 18, characterized in that the platform consists of a ceramic material.

21. Platform according to one of Claims 1 - 18, characterized in that the platform consists of vitreous carbon.

22. Platform according to one of Claims 1 - 18, characterized in that the platform consists of a metallic material.

23. Platform according to Claim 22, characterized in that the platform consists of tungsten.

24. Platform according to Claim 22, characterized in that the platform consists of tantalum.

25. Platform according to one of Claims 1 - 18, characterized in that the platform consists of pyrolytic graphite.

26. Platform according to one of Claims 1 - 24, characterized in that the central aperture of the holding ring or rings (4, 8) and hence of the effectively acting cross-section of the measuring light beam passing through is reduced to a minimum amount which is required for the detection capability and the reproducibility of the analysis.

## Revendications

1. Plateau pour un four électrothermique d'atomisation, à chauffage transversal, pour la spectroscopie d'absorption atomique, comportant un tube (2) formant four, l'échantillon étant exposé sur un porte-échantillon directement, au rayonnement thermique de la paroi intérieure du tube chauffée électriquement, et pour maintenir le porte-échantillon (7), ainsi que pour limiter de manière commandée l'expansion thermique des atomes à analyser dans le tube formant (2) four, il est prévu, aux extrémités du tube, des bagues (4, 5) de maintien dans lesquelles passe le courant électrique, ces bagues rétrécissant la section transversale du tube, ayant un diamètre extérieur qui correspond environ au diamètre intérieur du tube formant four et ayant une largeur totale représentant moins de 40 % de la longueur du tube,
au moins l'une des bagues (4, 5) de maintien étant reliée rigidement au porte-échantillon (7) et formant en venant de matière avec lui, le plateau, et le porte-échantillon (7) lui-même n'ayant pas de contact électrique, ni thermique direct avec la paroi du tube.

2. Plateau suivant la revendication 1, caractérisé en ce que au moins l'une des bagues (4, 5) de maintien est reliée au porte-échantillon (7) par une zone (6) de transition pour la régulation de l'afflux de chaleur.

3. Plateau suivant la revendication 1 ou 2, caractérisé en ce que au moins l'une des bagues (4, 5) est reliée rigidement au tube (2) formant four par une couche déposée par voie pyrolytique.

4. Plateau suivant l'une des revendications 1 à 3, caractérisé en ce que des deux côtés du porte-échantillon, il est prévu une bague (4, 5) de maintien, qui est reliée rigidement au porte-échantillon et vient de matière avec lui.

5. Plateau suivant la revendication 1 ou 2, caractérisé en ce que le plateau, notamment dans le cas d'analyse de matière solide, peut être remplacé en tant qu'unité distincte.

6. Plateau suivant la revendication 5, il est prévu une bague (4) de maintien, qui est reliée rigidement au porte-échantillon et qui vient de matière avec lui, une seconde bague (8) étant issue du côté opposé à la bague (4) de maintien à l'intérieur du tube, cette seconde bague ayant la même forme géométrique que la bague (4) de maintien.

7. Plateau suivant la revendication 6, caractérisé en ce que une fente (9) est prévue entre le porte-échantillon (7) et la seconde bague (8) de maintien.

8. Plateau suivant la revendication 5, caractérisé en ce que de chaque côté du porte-échantillon il est prévu une bague (4, 5) de maintien reliée rigidement à celui-ci.

9. Plateau suivant l'une des revendications 1 à 8, caractérisé en ce que la forme de l'ouverture (11, 12, 13) centrale de ou des bague(s) (4, 8) de maintien est adaptée à la forme du faisceau de rayonnement de lumière de mesure.

10. Plateau suivant la revendication 9, caractérisé en ce que l'ouverture (11) centrale est de forme circulaire.

11. Plateau suivant la revendication 9, caractérisé en ce que l'ouverture (12, 13) centrale a la forme d'une fente verticale.

12. Plateau suivant la revendication 11, caractérisé en ce que la fente (12) est ovale.

13. Plateau suivant la revendication 11, caractérisé en ce que la fente (13) est rectangulaire.

14. Plateau suivant la revendication 11, caractérisé en ce que la fente a une forme ellipsoïdale.

15. Plateau suivant l'une des revendications 1 à 14, caractérisé en ce que le porte-échantillon comporte un évidemment en forme de cuvette.

16. Plateau suivant l'une des revendications 1 à 14, caractérisé en ce que le porte-échantillon comporte un évidemment en forme d'auge.

17. Plateau suivant l'une des revendications 1 à 16, caractérisé en ce qu'il est prévu, pour l'introduction du plateau, lors de l'analyse de matières solides, des moyens de guidage dans le tube formant four et/ou du plateau.

18. Plateau suivant l'une des revendications 1 à 17, caractérisé en ce que la zone (6) de transition comprend, entre les bagues de maintien et le porte-échantillon, des étranglements et/ou des perçages pour influer sur le flux de chaleur des bagues (4, 5) de maintien au porte-échantillon (7).

19. Plateau suivant l'une des revendications 1 à 18, caractérisé en ce que le plateau est constitué de graphite ou est revêtu de graphite appliqué par voie pyrolytique.

20. Plateau suivant l'une des revendications 1 à 18, caractérisé en ce que le plateau est constitué d'un matériau en céramique.

21. Plateau suivant l'une des revendications 1 à 18, caractérisé en ce que le plateau est constitué de carbone de verre.

22. Plateau suivant l'une des revendications 1 à 18, caractérisé en ce que le plateau est constitué d'un matériau métallique.

23. Plateau suivant la revendication 22, caractérisé en ce que le plateau est constitué de tungstène.

24. Plateau suivant la revendication 22, caractérisé en ce que le plateau est constitué de tantale.

25. Plateau suivant l'une des revendications 1 à 18, caractérisé en ce que le plateau est constitué de graphite pyrolytique.

26. Plateau suivant l'une des revendications 1 à 24, caractérisé en ce que l'ouverture centrale de la ou des bague(s) (4, 8) de maintien, et donc la section transversale efficace active du faisceau de lumière de mesure la traversant, est abaissée jusqu'à une valeur minimale nécessaire au pouvoir de détection et à la reproductibilité de l'analyse.
